# EUROPEAN PATENT SPECIFICATION

(11) **EP 0 596 164 B1**
(45) Date of publication and mention of the grant of the patent: **05.08.1998**
(21) Application number: 92310017.6
(22) Date of filing: 02.11.1992
(51) Int. Cl.: A63H 3/52, A63H 33/04, F16B 7/04

(54) **Children's play structure**
Spielzeug-Bauwerk
Structure de jeu pour enfants

(43) Date of publication of application: 11.05.1994
(73) Proprietor: CALAPITTER CREATIONS INC., Redlands, California 92373 (US)
(72) Inventor: Melashenko, Robert A., Redlands, California 92373 (US); Melashenko, Connie R., Redlands, California 92373 (US)
(74) Representative: Lloyd, Patrick Alexander Desmond

(56) References cited:
- EP-A- 0 413 649
- FR-A- 2 653 836
- US-A- 2 719 384
- US-A- 4 911 670

## Description

### Background Of The Invention

### 1. Field of the Invention

The present invention relates to free-standing children's play structures, and more particularly to play structures designed to provide the child with a particular theme or environment through the use of various scenes, murals or the like. The play structure includes a free-standing frame structure comprised of hinging sections for mounting panels having murals or scenes thereon.

### 2. History of the Prior Art

It is known to provide a child's play structure such as a playhouse or similar free-standing structure to enhance the child's play. Such structures are often provided with scenes, murals or the like which impart a particular theme or environment such as a school classroom, a doctor's office, a store, a spaceship or the like. The scenes or murals depict enough to suggest the desired theme or environment, while at the same time allowing the child to use his or her imagination with respect to some of the details. The child is thus able to act out various activities and sequences of events using the play structure as a prop.

Examples of children's play structures of this type are provided by U.S. Patent No. 984,735 of Bailey, U.S. Patent No. 4,919,982 of Hayes, U.S. Patent No. 4,765,006 of Jackson, et al., U.S. Patent No. 4,407,494 of Hummel, U.S. Patent No. 1,881,356 of Gold, U.S. Patent No. 3,548,552 of McBride, U.S. Patent No. 2,837,777 of White, U.S. Patent No. 2,608,726 of Olson, U.S. Patent No. 1,982,433 of Hungerford, U.S. Patent No. 1,647,733 of Keichline, U.S. Patent Des. 159,019 of Valentine, U.S. Patent No. 4,884,988 of McMurray, U.S. Patent No. 4,696,652 of Reeder, et al. and U.S. Patent No. 4,556,391 of Tardivel, et al. Such play structures are often made in a foldable or collapsible configuration so that they can be folded or otherwise substantially reduced in size to facilitate storage thereof when not in use. Such structures are assembled or erected to form a free-standing structure for use. As shown in some of the patents noted above, the play structures may form an enclosure to simulate a room or a house, and can be provided with partitions or other interior members which divide the interior into plural rooms, compartments or the like. Still other structures, such as the considerably smaller playhouse for use with paper dolls shown in the Hungerford patent noted above, provide different partitions or additions to change portions of the structure somewhat.

Further examples of children's play apparatus are disclosed in U.S. Patent No. 4,911,670 of McNichols which discloses multiple panels connected by folds, and U.S. Patent No. 2,719,384 of Eames which discloses a hinged frame structure, and which forms the preamble of claim 1.

While conventional children's play structures such as those described in the patents noted above provide a variety of different forms, themes, ideas and features, such structures are somewhat limited when it comes to their ability to easily convert to different themes or environments. Most such structures, for example, are designed to provide one and only one theme or environment with no interchangeability being possible. Still others provide for some interchangeability, but typically at the expense of complexity and an inherent difficulty in making the changes.

The various frame structures for supporting the scenes and murals described in some of the patents cited above leave room for improvement, particularly from the standpoint of providing a frame structure of adequate rigidity when erected for use. Those frame structures which are of particularly simple and lightweight construction in their design tend to lack the desired rigidity so as to be prone to collapsing, particularly when relatively heavy panels are placed thereon or when subjected to external forces. Still other designs which may have greater rigidity and resistance to collapse may be too heavy or cumbersome or complex to be practical or economical. Also, the frame sections may be difficult to assemble for use and to disassemble for storage or transport.

Accordingly, there is provided a children's play apparatus according to claim 1. An embodiment of the present invention provides a children's play structure of relatively simple, low cost construction which is easily folded or disassembled for storage and which has multiple scenes or murals which are easily replaced to change the theme or environment of the structure. An embodiment of the present invention also provides an improved hinged frame structure.

An embodiment of the present invention further provides a hinged frame structure having sufficient rigidity to be able to stand alone and to support murals mounted thereon, without substantial danger of collapse, and while at the same time providing a relatively lightweight, simple and economical structure which is easily assembled and disassembled.

### Brief Description Of The Invention

Children's play structures according to the invention utilize one or more interchangeable panels in conjunction with a frame. Each panel is comprised of a scene or mural or portion thereof representing a particular theme or environment. The interchangeable panels are easily installed on and removed from the frame so as to change the theme or environment of the play structure. The frame, which is erected to form a free-standing structure when in use, is foldable into a compact structure to facilitate transportation and storage.

In a first embodiment according to the invention, each hinging section of the frame previously described is provided with a separate panel having a scene or mural or portion thereof painted or printed thereon. The panel which is slightly larger than the hinging section of the frame is removably attached thereto by appropriate fasteners such as small Velcro patches which attach the panel to itself as it folds over the horizontal bars of the frame. The panels, which are interchangeable and which can be made from a laminate of paper stock or of other appropriate construction, are easily removed from the various hinging sections of the frame by simply pulling the folded over portion of the panel from the remainder of the panel to separate the Velcro patches. A replacement panel containing a different desired scene or mural or portion thereof and which is provided with Velcro patches at the back side thereof is then easily installed over the hinging section of the frame by attaching the Velcro patches on the fold over portion to the Velcro patches on the back of the remainder of the panel.

The present invention provides hinged frame structures of relatively lightweight, simple and economical construction, and which at the same time are relatively rigid and capable of supporting a substantial amount of weight placed thereon and of resisting external forces applied thereto. Such structures are comprised of a plurality of hinging sections of flat, rectangular and generally open construction. Adjacent frame sections are joined for relative hinging movement by a corner structure utilizing a single corner post or other beam-like vertical member. The upper and lower beams of adjacent frame sections are coupled to the common corner post by hinging apparatus which fixedly couples the corner post to one frame section while permitting hinging movement of the adjacent frame section relative to the corner post. By designing the corner structure so that only one of the frame sections joined thereby is pivotable relative to the corner post and so that the upper and lower beams of adjacent frame sections couple to the corner post in a manner which prevents excessive vertical flexibility, the free-standing structure is provided with the necessary strength and rigidity to be both free-standing and to support the weight of panels or other devices when opened into a variety of different configurations.

In a preferred embodiment of a hinged frame structure according to the invention, adjacent frame sections are joined by a corner structure comprised of hinging apparatus at upper and lower ends of a common corner post. The upper and lower hinging apparatuses each include a clevis removably coupled via a plug to a tube comprising one of the horizontal beams of one hinging section, and a lever removably coupled by a plug to a tube comprising one of the horizontal beams of the adjacent frame section. The clevis and the lever of each hinging apparatus are rotatably joined by a shaft extending through apertures in interleaved legs of the clevis and the lever. This permits pivoting movement of the lever relative to the clevis and the shaft while at the same time minimizing vertical flexure of both the lever and the clevis relative to the shaft. An opposite cap is joined to the shaft by an internal screw to hold the hinging apparatus together. The shaft is secured within one of the opposite upper and lower ends of the corner post. The shaft and the cap are secured against rotation within the clevis, thereby preventing rotation of the corner post relative to the upper and lower tubes of one of the frame sections. At the same time, the levers are freely rotatable relative to the clevises as well as to the shafts and caps so as to permit rotational movement of the adjacent frame section relative to the corner post.

The plugs employed to couple the horizontal tubes at the upper and lower portions of the frame sections to the clevis and the lever and which are rigidly secured within the tubes such as by gluing are releasable from the clevis and the lever by manual depression of a resilient retainer formed as part of the plug. The resilient retainer has a tab at the extremity thereof which seats within a mating aperture in the clevis or the lever when the plug is inserted therein, to prevent removal of the plug. Manual depression of the tab flexes the resilient retainer until the tab is free of the aperture, at which point the plug can be removed from the clevis or the lever. This greatly facilitates assembly and disassembly of the frame sections.

In one example of a hinged frame structure employing corner structures of the type described at the interfaces between adjacent hinging sections, a rectangular back frame section which has upper and lower horizontal tubes coupled to opposite corner structures thereof is pivotally coupled to opposite rectangular side frame sections having upper and lower tubes coupled to the corner structures of the back frame section. The horizontal tubes of the side frame sections are also coupled to corner structures which pivotally couple the side frame sections to a pair of rectangular front frame sections. Such corner structures are coupled to horizontal tubes within the front frame sections. The configuration of the corner structures, including the hardware used to join the opposite horizontal tubes and the ability of the horizontal tubes on only one side of the common corner post to pivot relative thereto, provide the resulting hinged frame structure with substantial rigidity when erected into a variety of different configurations.

### Brief Description Of The Drawings

The foregoing and other objects, features and advantages of the invention will be apparent from the following more particular description of a preferred embodiment of the invention, as illustrated in the accompanying drawings, in which:
Fig. 1 is a perspective view of a children's play structure employing a hinged frame structure according to the invention;
Fig. 2 is an elevation view of the hinged frame structure of the children's play structure of Fig. 1 which has been opened to assume a linear configuration and to illustrate the various hinging frame sections thereof;
Fig. 3 is a perspective view of a portion of the children's play structure of Fig. 1, showing the manner in which panels are mounted on adjacent frame sections of the hinged frame structure;
Fig. 4 is a sectional view of one of the horizontal tubes and a portion of an associated panel of the arrangement of Fig. 3, showing the manner in which the panel is removably mounted;
Fig. 5 is a sectional view of a corner structure of the hinged frame structure of Fig. 2, showing the details of hinging apparatus for pivotally joining adjacent frame sections;
Fig. 6 is a sectional view of a different portion of the hinged frame structure of Fig. 2, showing the manner in which a terminating end of one of the front frame sections is coupled to the horizontal tubes thereof;
Fig. 7 is a perspective view of a plug used to releasably join the horizontal tubes in the arrangements of Figs. 5 and 6;
Fig. 8 is a perspective view of a clevis used in the arrangement of Fig. 5;
Fig. 9 is a top view of the clevis of Fig. 8;
Fig. 10 is a bottom view of the clevis of Fig. 8;
Fig. 11 is an end view of the clevis of Fig. 8;
Fig. 12 is a perspective view of a lever used in the arrangement of Fig. 5;
Fig. 13 is a top view of the lever of Fig. 12;
Fig. 14 is an end view of the lever of Fig. 12;
Fig. 15 is a perspective view of a shaft used in the arrangement of Fig. 5;
Fig. 16 is a perspective view of a cap used in the arrangement of Fig. 5;
Fig. 17 is a perspective view of the children's play structure of Fig. 1, showing an alternative manner in which panels are mounted on adjacent frame sections of the hinged frame structure; and
Fig. 18 is a perspective view of one frame panel of Fig. 1, showing an alternative manner in which panels are mounted on a frame section of the hinged frame structure;

### Detailed Description

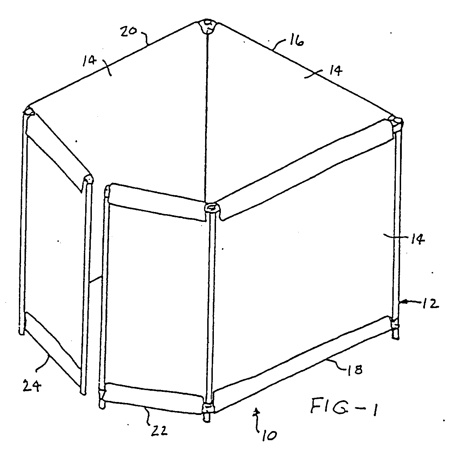

Fig. 1 shows a free∼standing structure in the form of a children's play structure 10 employing a hinged frame structure 12 in accordance with the invention. In addition to the hinged frame structure 12, the children's play structure 10 includes a plurality of panels 14 mounted on different sections of the hinged frame structure 12. Each panel 14 is provided with a mural or scene on one or both sides thereof, to provide the children's play structure 10 with a desired theme or environment.

As shown in Fig. 1, the hinged frame structure 12 is comprised of a plurality of hinging frame sections, which include a back section 16, opposite side sections 18 and 20, and a pair of front sections 22 and 24 hingingly coupled to the side sections 18 and 20, respectively. While the hinged frame structure 12 can be arranged into any desired configuration, typically such structure is arranged to form an enclosure in which the front sections 22 and 24 may be used as doors and otherwise serve to enclose the structure. In this manner, the enclosed structure formed by the hinged frame structure 12 can simulate a room or other enclosed space.

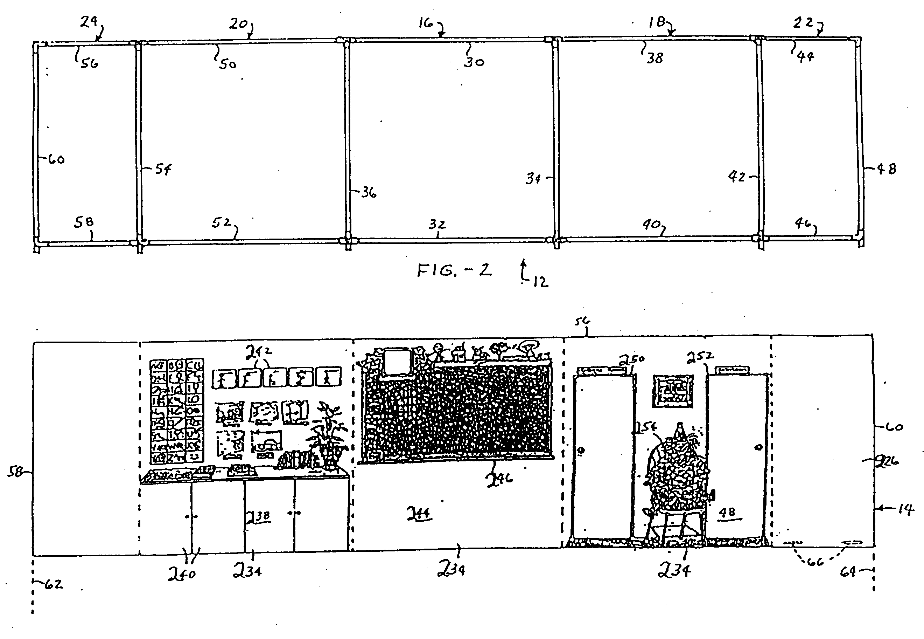

Fig. 2 is an elevational view of the hinged frame structure 12 which has been opened to assume a linear configuration and illustrating the various different hinging sections. As shown in Fig. 2 the center portion thereof forms the back section 16 which is hingingly coupled at opposite ends thereof to the opposite side sections 18 and 20. The side section 18 is hingingly coupled to the front section 22. Similarly, the side section 20 is hingingly coupled to the front section 24. Each of the frame sections 16, 18, 20, 22 and 24 is rectangular in shape and is of thin, planar, open construction. The back section 16 is comprised of upper and lower tubes 30 and 32 forming horizontal beams for the section 16. The tubes 30 and 32 are joined at their opposite ends to corner structures 34 and 36 forming the opposite ends of the back section 16.

The corner structure 34 of the back section 16 is shared by and forms one end of the side section 18 which has upper and lower tubes 38 and 40 forming the upper and lower horizontal beams thereof. The opposite end of the side section 18 is formed by a corner structure 42. The corner structure 42 also forms one end of the front section 22 which has upper and lower tubes 41 and 46 forming the horizontal beams thereof and extending between the corner structure 42 and a vertical tube 48 at the opposite end of the front section 22.

The corner structure 36 of the back section 16 is shared by and forms one end of the side section 20 which has horizontal beams comprised of an upper tube 50 and a lower tube 52. The opposite end of the side section 20 is formed by a corner structure 54. The corner structure 54 also forms one end of the front section 24 which has upper and lower tubes 56 and 58 forming the horizontal beams thereof. The upper and lower tubes 56 and 58 extend from the corner structure 54 to a vertical tube 60 at the opposite end of the front section 24.

The interchangeable multi-panel member 14 is also shown in Fig. 2. In the present example, the member 14 is comprised of flexible material such as canvas or similar cloth having a succession of panels 234 with scenes or murals printed or painted thereon. With the member 14 installed on the frame 12, each panel 234 is disposed over and is generally continuous with the side of one of the hinging sections 16, 18, 20, 22 and 24. The successive panels 234 shown in Fig. 2 are on the side 26 of the member 14. The opposite side 228 of the member 14 can also be provided with a succession of panels 236 with scenes or murals printed or painted thereon and each being disposed over and generally coextensive with a different one of the hinging sections 16, 18, 20, 22 and 24.

The successive panels 234 on the side 226 of the member 14 shown in Fig. 2 comprise different walls of a classroom providing a school theme or environment. Thus, one such panel 238 which resides on the inside of the side 20 when the panel 14 is installed on the frame 12 depicts a utility area of the classroom including cabinets 238 and student work papers 242. A second panel 244 residing on the inside of the back 16 with the member 14 installed over the frame 12 depicts a classroom wall having a blackboard 246. A third panel 248 which resides on the inside of the side 20 with the member 14 installed on the frame 12 depicts another wall of the classroom including two different doors 250 and 252 and a seated clown 254.

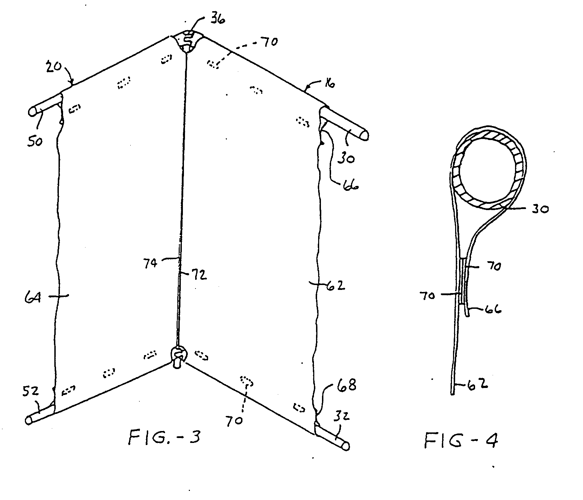

The manner in which the panels 14 are mounted on the various sections of the hinged frame structure 12 is shown in Figs. 3 and 4. Fig. 3 shows the adjoining portions of the back section 16 and the side section 20 which are joined by the corner structure 36. A panel 62 is mounted on the back section 16, while a panel 64 is mounted on the side section 20. The height of the panel 62 is greater than the distance between the upper and lower tubes 30 and 32 so that opposite upper and lower ends 66 and 68 of the panel 62 may be looped over and around the upper and lower tubes 30 and 32. The upper end 66 is secured to the panel 62 by opposing pairs of Velcro patches 70 which are shown in dotted outline in Fig. 3. Fig. 4 shows one of the opposing pairs of the Velcro patches 70 as they are used to join the panel 62 to itself after looping over the upper tube 30. The lower end 68 of the panel 62 is wrapped around the lower tube 32 and secured to itself by opposing pairs of the Velcro patches 70, in similar fashion. The upper and lower ends of the panel 64 are secured to the upper and lower tubes 50 and 52 of the side section 20, in similar fashion.

In the present example, the panels 14 such as the panels 62 and 64 are made of plastic sheeting which has desired murals or scenes printed thereon. The murals or scenes can be printed on one side only or on both sides of the panels 14, as desired. As shown in Fig. 3, the upper and lower corners of the panels 14 are cut back so as to fit around the upper and lower ends of the corner structures such as the structure 36. This permits the side edges, such as edges 72 and 74 of the panels 62 and 64, to abut one another and thereby cover essentially all of the corner structure 36.

When erecting the children's play structure 10, the hinged frame structure 12 is first placed in a desired position such as that shown in Fig. 1. The various panels 14 are then mounted on the sections of the hinged frame structure 12 using the opposing pairs of Velcro patches 70, in the manner previously described. With the panels 14 mounted on the hinged frame structure 12 in this manner, the murals or scenes on the panels 14 create the desired environment or theme of the children's play structure 10. Disassembly of the children's play structure 10 is initiated by separating the opposing pairs of Velcro patches 70 and removing the panels 14 from the hinged frame structure 12. Thereafter, the hinged frame structure 12 can be disassembled or folded.

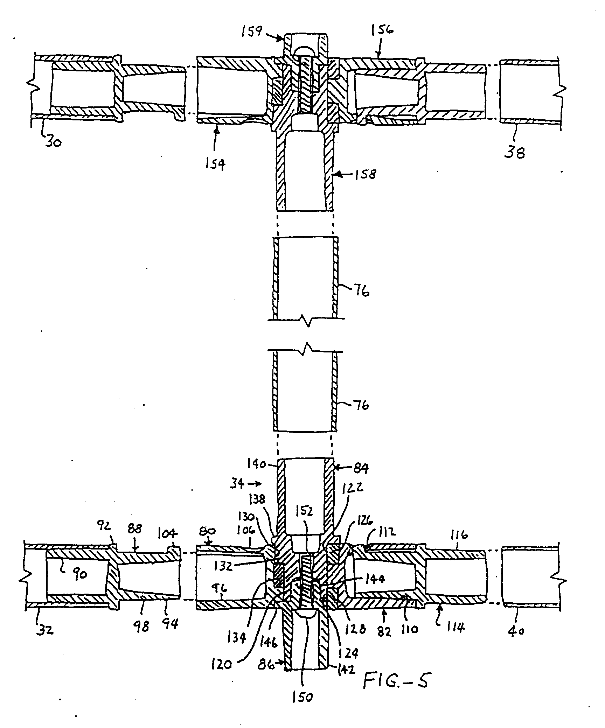

As previously described in connection with Fig. 2, the various sections 16, 18, 20, 22 and 24 of the hinged frame structure 12 are joined by the corner structures 34, 36, 42 and 54. The corner structures 34, 36, 42 and 54 are of like construction, and each includes pivoting apparatus at the opposite upper and lower ends thereof which is of like configuration. Exemplary of such pivoting apparatus is the apparatus shown in Fig. 5. The apparatus shown in Fig. 5 represents the corner structure 34 which joins the upper tubes 30 and 38 and the lower tubes 32 and 40 of the back section 16 and the side section 18. The corner structure 34 includes a single common corner post in the form of a vertical tube 76 extending between the upper and lower ends of the corner structure 34.

The lower portion of the corner structure 34 shown in Fig. 5 includes a clevis 80 which is pivotably coupled to a lever 82 by a shaft 81 and an opposite cap 86. The clevis 80 is removably coupled to the lower tube 32 by a plug 88 having a first cylindrical end 90 thereof disposed within the hollow interior of the lower tube 32 and secured in place therein such as by gluing. The cylindrical end 90 terminates at a flange 92 which is seated against the outer end of the lower tube 32. An end 94 of the plug 88 on the opposite side of the flange 92 from the cylindrical end 90 is of slightly tapered configuration so as to be slidably received within a slightly tapered hollow interior 96 of the clevis 80.

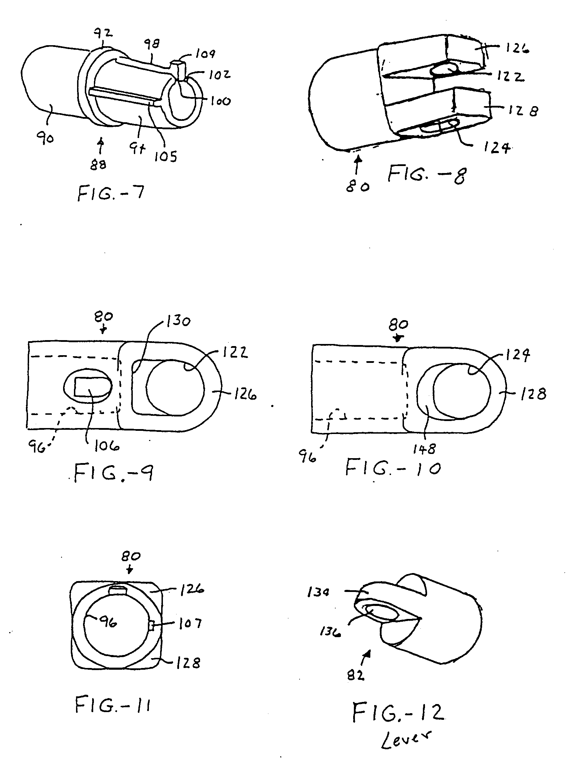

As shown in Fig. 7, which is a perspective view of the plug 88, the tapered end 94 includes a resilient retainer 98 separated by opposite slots 100 and 102 from the main portion of the tapered end 94. The resilient retainer 98, which extends longitudinally along the tapered end 94 from the flange 92, terminates in a tab 104. The tapered end 94 also includes a longitudinal flange 105 along a portion thereof removed by approximately 90° from the location of the resilient retainer 98.

Insertion of the tapered end 94 of the plug 88 into the hollow interior 96 of the clevis 80 engages the tab 104 against a wall of the hollow interior 96 so as to compress the resilient retainer 98 inwardly. As the tapered end 94 reaches the end of the hollow interior 96 where it is to be seated, the tab 104 snaps into an aperture 106 in the wall of the clevis 80 to lock the resilient retainer 98 in such position and thereby removably secure the lower tube 32 to the clevis 80. Proper orientation of the plug 88 in the hollow interior 96 of the clevis 80 is established and thereafter maintained by the longitudinal flange 105 which is inserted into a longitudinal slot 107 in the hollow interior 96. The flange 105 and the slot 107 prevent rotation of the plug 88 within the clevis 80. The slot 107 is shown in the end view of Fig. 11.

Removal of the lower tube 32 from the corner structure 34 during disassembly of the hinged frame structure 12 is accomplished by pressing inwardly on the tab 104 at the outside of the aperture 106 to compress the resilient retainer 98 by a sufficient amount so that removal of the tapered end 94 of the plug 88 from the hollow interior 96 of the clevis 80 is initiated. Thereafter, the tab 104 slides along the surface of the hollow interior 96 as the tapered end 94 is withdrawn from the hollow interior 96.

Like the clevis 80, the lever 82 is provided with a slightly tapered hollow interior 110 having an aperture 112 in a sidewall thereof. A plug 114 having a configuration like that of the plug 88 is releasably installed in the hollow interior 110 of the lever 82 in similar fashion. The plug 114 has a cylindrical end 116 which is permanently secured to the hollow interior of the lower tube 40, such as by gluing. In this manner, the lower tube 40 is releasably secured to the lever 82.

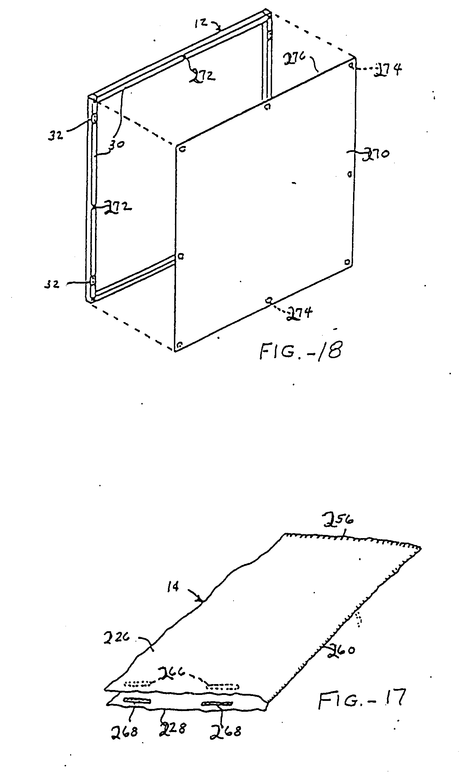

The lever 82 is pivotably coupled to the clevis 80 by the shaft 84 and the cap 86. The shaft 84, which is also shown in Fig. 15, has a lower portion 120 thereof of generally cylindrical configuration which extends through apertures 122 and 124 in a spaced-apart pair of legs 126 and 128 formed at one end of the clevis 80. The clevis 80 is shown in Figs. 8-11 as well as in Fig. 5. As shown in Figs. 5 and 9, the aperture 122 in the leg 126 has a recessed portion 130 formed within the leg 126 at one side of the aperture 122 for receiving a radial lug 132 formed at an upper end of the lower portion 120 of the shaft 84. With the lug 132 seated in the recessed portion 130, rotation of the shaft 84 relative to the clevis 80 is prevented.

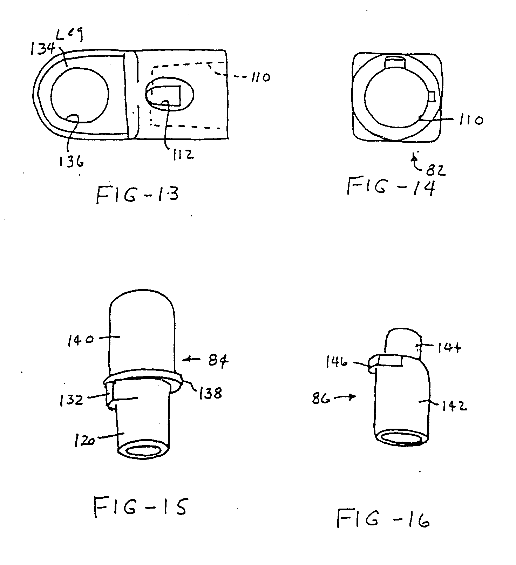

The lever 82, which is shown in Figs. 12-14 as well as in Fig. 5, has a single leg 134 formed at one end thereof, for disposition between the opposing legs 126 and 128 of the clevis 80. An aperture 136 in the leg 134 receives the lower portion 120 of the shaft 84, to provide rotational or pivoting movement of the lever 82 relative to the clevis 80.

The lower portion 120 of the shaft 84 extends downwardly from an intermediate flange 138 which seats on the top of the clevis 80. A hollow, generally cylindrical upper portion 140 of the shaft 84 extends upwardly from the flange 138 and is received within the hollow interior of the vertical tube 76, where the upper portion 140 may be fixedly secured such as by gluing. Because the lug 132 on the lower portion 120 of the shaft 84 seats within the recessed portion 130 in the upper leg 126 of the clevis 80 to prevent rotation of the shaft 84 relative to the clevis 80, the vertical tube 76 is also fixed and cannot rotate relative to the clevis 80. However, the lever 82 which is freely rotatable about the lower portion 120 of the shaft 84 can also rotate relative to the vertical tube 76.

With the lower portion 120 of the shaft 84 seated within the legs 126 and 128 of the clevis 80 and the leg 134 of the lever 82, the shaft 84 is secured in such position by the cap 86. The cap 86, which is also shown in Fig. 16, has a lower portion 142 of hollow, generally cylindrical configuration joined to an upper portion 144 of hollow, generally cylindrical configuration and of smaller size than the lower portion 142. A lug 146 extends radially outwardly from the lower portion 142 at an upper end thereof adjacent a lower end of the upper portion 144. The lug 146 is seated within a recessed portion 148 extending from the aperture 124 in the lower leg 128 of the clevis 80 when the upper portion 144 thereof is inserted into the hollow interior of the lower portion 120 of the shaft 84. The recessed portion 148 is shown in Fig. 10. This prevents rotation of the cap 86 relative to the clevis 80 and the shaft 84. The cap 86 is secured in this position by a screw 150 which is inserted into the hollow interior of the lower portion 142 of the cap 86. The screw 150 extends through the hollow interior of the upper portion 144 of the cap 86 and engages the interior walls of a bore 152 extending upwardly from the hollow interior of the lower portion 120 of the shaft 84.

With the shaft 84 seated within the apertures 122 and 124 in the legs 126 and 128 of the clevis 80 and held in place by the cap 86, the lower tube 32 is securely joined to the vertical tube 76. A snug fit between the clevis 80 and the shaft 84 and cap 86 is further provided by the flange 138 and the lug 146. As a result, vertical flexure or movement of the lower tube 32 relative to the vertical tube 76 is negligible. The same is true of the lower tube 40 which is coupled to the vertical tube 76 by the lever 82. The leg 134 fits snugly around the shaft 84 and between the legs 126 and 128 of the clevis 80. Adjacent portions of the lever 82 fit snugly against the legs 126 and 128 of the clevis 80. In this manner vertical flexure of the lower tube 40 relative to the vertical tube 76 is negligible. This provides the hinged frame structure 12 with substantial rigidity.

The clevis 80, the lever 82, the shaft 84 and the cap 86 of Fig. 5 comprise the hinging apparatus for coupling the tubes 32 and 40 to the corner structure 34. Such apparatus is coupled to the lower end of the vertical tube 76. Similar apparatus is employed at the upper end of the vertical tube 76 to couple the tubes 30 and 38 of the back section 16 and the side section 18. As shown in Fig. 5 such hinging apparatus, which includes a clevis 154, a lever 156, a shaft 158 and a cap 159, is identical to the lower apparatus just described, except that it is inverted and the cap 159 thereof is shorter than the cap 86. The longer lower portion 142 of the lower cap 86 provides a foot for supporting the corner structure 34 and the joined portions of the hinged frame structure. However, in the case of the upper cap 159, there is no need for a long supporting foot. As in the case of the lower hinging apparatus, the clevis 154 is releasably coupled to the upper tube 30 and the lever 156 is releasably coupled to the upper tube 38. In this manner, the upper tube 38 is capable of undergoing pivoting rotation relative to the vertical tube 76, while the upper tube 30 is not.

At the opposite end of the back section 16 formed by the corner structure 36, the lower tube 32 of the back section 16 and the lower tube 52 of the side section 20 are coupled together by hinging apparatus similar to that shown in Fig. 5. Such hinging apparatus may permit the upper and lower tubes 50 and 52 of the side section 20 to undergo pivoting rotation relative to the corner structure 36 while preventing the upper and lower tubes 30 and 32 of the back section 16 from such rotation, or vice versa. The important thing from the standpoint of stability is that the single common vertical corner member be rotatable relative to only one of the two panel sections which it joins.

In similar fashion, the corner structure 42 which couples the side section 18 to the front section 22 may be configured so that the upper and lower tubes 44 and 46 of the front section 22 are capable of undergoing pivoting rotation relative to the corner structure 42 with the upper and lower tubes 38 and 40 of the side section 18 being fixed relative thereto, or vice versa. Likewise, at the corner structure 54 joining the front section 24 to the side section 20, the upper and lower tubes 56 and 58 of the front section 24 may be capable of undergoing pivoting rotation relative to the corner structure 54 with the upper and lower tubes 50 and 52 of the side section 20 being fixed, or vice versa.

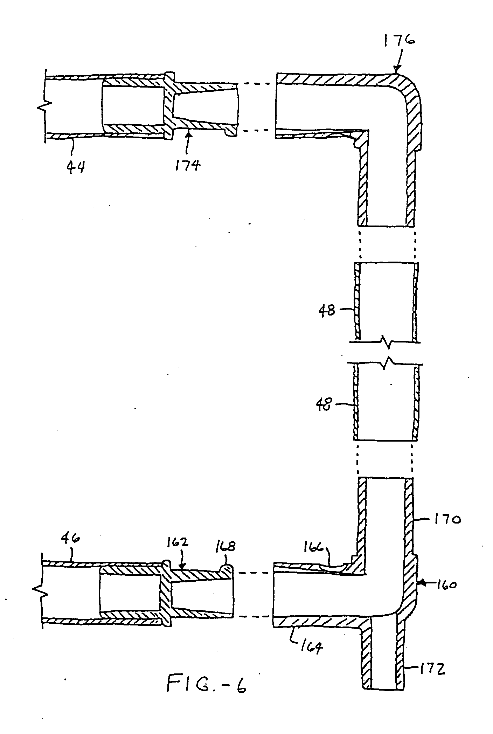

Within the front section 22, the lower tube 46 is coupled to the vertical tube 48 by an elbow 160, as shown in Fig. 6. A plug 162 like the plug 88 shown in Fig. 7 is secured within the hollow interior of the lower tube 46, such as by gluing, and is releasably secured within a horizontal portion 164 of the elbow 160. The horizontal portion 164 includes an aperture 166 for receiving a tab 168 on the plug 162, in the same manner that the aperture 106 in the clevis 80 receives the tab 104 of the plug 88, as previously described in connection with Fig. 5.

The elbow 160 extends through a right-angle bend between the horizontal portion 164 and a vertical portion 170. The vertical portion 170 is configured to fit within the hollow interior of the lower end of the vertical tube 48, where the vertical portion 170 is permanently secured such as by gluing. A further vertical portion 172 extends downwardly from the right-angle bend of the elbow 160 to form a supporting foot, much in the manner of the cap 86 shown in Fig. 5.

The upper tube 44 of the front section 22 is coupled to the upper end of the vertical tube 48 by apparatus similar to that shown in Fig. 6, except that such apparatus is inverted and has no vertical portion 172. A plug 174 similar to the plug 162 is employed to releasably couple the upper tube 144 to an elbow 176 within such corner structure. The elbow 176 extends into an upper end of the vertical tube 48, where it is permanently secured such as by gluing. The upper and lower tubes 56 and 58 of the front section 24 are coupled to the vertical tube 60 in similar fashion.

It will be appreciated that hinging apparatus such as that shown in Fig. 5 combines with the upper and lower tubes releasably coupled thereto to provide a hinged frame structure 12 which is substantially rigid and which is capable of supporting a substantial amount of weight and resisting a substantial amount of external force. At the same time, such hinged frame structure 12 is relatively lightweight and of simple and economical construction. The pivoting movement permitted between the vertical tube of each corner structure and one of the adjoining frame sections provides at least 180° of hinging movement between the adjoining frame sections, so that the hinged frame structure 12 can be placed in a variety of different configurations. At the same time, the hinged frame structure 12 is easily disassembled for transport or storage. The upper and lower tubes of the various frame sections are released from the corner structures using the plugs such as the plug 88 shown in Fig. 7, in the manner previously described. With the panels 14 removed from the children's play structure 10, the hinged frame structure 12 can be disassembled into a plurality of elongated sections.

Figure 17 illustrates an alternative technique for mounting the panel members on the frame 12. The piece of canvas comprising the member 14 with its succession of different panels is folded over on itself at a top edge 256 to form the opposite sides 226 and 228 of the member 14. With the canvas thus folded, opposite ends 258 and 260 thereof are stitched together so that the member 14 forms a "sock". This "sock" is simply dropped over the frame 12, to install the member 14 on the frame 12. With the member 14 thus draped over the frame 12, the member 14 is secured in place thereon by opposite fastening members in the form of Velcro strips 266 and 268 secured to the lower edges of the sides 226 and 228 of the member 14. Fig. 17 illustrates an end portion of the member 14 including two different pairs of the Velcro strips 266 and 268. The Velcro strips 266 are shown in dotted outline in Fig. 17. With the member 14 draped over the frame 12, the Velcro strips 266 and 268 reside just below the lower beam 30 of each hinging section of the frame 12. By pressing the opposite Velcro strips 266 and 268 into contact with one another, the opposite sides 226 and 228 of the member 14 are thereby secured together at the underside of the lower beam 30. The opposite Velcro strips 266 and 268 are spaced apart along the entire bottom edge of the member 14 so that a plurality of the pairs of such strips are located within each of the hinging sections of the frame 12.

Removal of the member 14 from the frame 12 involves the simple process of pulling apart the opposite sides 226 and 228 of the member 14 to separate the pairs of Velcro strips 266 and 268. With the Velcro strips 266 and 268 separated along the bottom edges of the member 14, the member 14 may then be lifted off of the frame 12. Thereafter, the frame 12 can be folded for storage, or a different multi-panel member 14 providing a different theme or environment can be mounted on the frame 12 in the manner just described.

A third embodiment in accordance with the invention is shown in Fig. 18. In the third embodiment, each hinging section of the frame 12 is provided with a separate interchangeable panel such as a panel 270 shown in Fig. 18. The hinging section of the frame 12 shown in Fig. 18 can comprise any of the sections 16,18 and 20 shown in Fig. 2. The hinging panel sections 22 and 24 shown in Fig. 2 which are approximately half the width of the sections 16, 18 and 20 have panels of conforming size and configuration removably attached thereto in a manner similar to the arrangement shown in Fig. 18.

In the present example of the third embodiment as shown in Fig. 18, the panel 270 is removably attached to the section of the frame 12 shown therein by Velcro patches. A first plurality of Velcro patches 272 are mounted at the ends and the mid-points of the beams 30. A second plurality of Velcro patches 274 are secured to a backside 276 of the panel 270. The Velcro patches 274, which are shown in dotted outline in Fig. 18 and which are mounted on the backside 276 of the panel 270, align with the Velcro patches 272 on the section of the frame 12 when the panel 270 is placed against the frame 12. The Velcro patches 274 adhere to the Velcro patches 272 to mount the panel 270 on the frame 12. Removal of the panel 270 from the frame 12 is accomplished by pulling the panel 270 away from the frame 12 to separate the Velcro patches 274 from the Velcro patches 272.

It should be understood that the Velcro patches 272 and 274 provide but one example of the manner in which the panel 270 may be removably attached to the hinging section of the frame 12. Other arrangements are possible, including those in which mechanical snaps are mounted on the backside 276 of the panel 270 and on the frame 12.

As in the case of the multi-panel member 14 shown in Fig. 2, the panel 270 of the arrangement of Fig. 18 can have a separate scene or mural printed or painted thereon. Alternatively, the scene printed or painted on the panel 270 can comprise a portion of a continuous mural or scene extending across part or all of the entire frame 12. The panel 270 may be of any appropriate construction such as a pressed paper laminate.

The first embodiment of the invention shown in Figs. 1-3 is preferred over the second and third embodiments shown in Figs. 17-18 for most applications of the invention. Providing a plurality of the individual panels 234 shown in Fig. 2 is typically less expensive than preparation of the sock of canvas or other material comprising the multi-panel member 14 of Fig. 17. In addition, the individual panels 234 are generally easier to install and remove than is the multi-panel member 14 which may be relatively large and cumbersome, particularly for one person to handle.

## Claims

1. A children's play apparatus comprising the combination of:
a frame comprised of a plurality of hinging sections capable of being arranged into a generally enclosed free-standing structure; wherein each of the plurality of hinging sections (16) is joined to at least one other hinging section by a corner structure (34, 36) and is comprised of four beams (30, 32, 34, 36) joined together at opposite ends thereof to form a generally rectangular structure with an open interior; and a panel to provide a scene on at least one of said hinging sections of said frame, the scene creating a setting which simulates a common play environment, the scene covering substantially all of one of the hinging sections;
characterised in that said corner structure (34,36) comprises a clevis (80) coupled to one of said hinging sections (16), a shaft (84) non-rotatably mounted within the clevis (80) and non-rotatably coupled to the corner structure (34,36) and a lever (82) coupled to a second hinging section (18) and received at least partly within the clevis (80), the lever (82) being rotatable about the shaft (84); and that
the panel is an interchangeable panel comprising a flexible material capable of removable attachment to the frame.

2. Apparatus according to claim 1, wherein the interchangeable panel is selected from a plurality of interchangeable panels (14) comprising a flexible material, each said panel displaying a scene and capable or removable attachment to one of said hinging sections (16,18,20,22,24).

3. Apparatus according to claim 1, wherein the plurality of sections (16, 18, 20, 22, 24) are of generally like height; and
the apparatus comprises a plurality of interchangeable panels (14) each displaying a scene to provide multiple scenes and each panel (14) comprising flexible material adapted to be mounted on the frame (12) to form at least one scene on the frame (12), each of the multiple scenes covering substantially all of at least one of the plurality of sections (16, 18, 20, 22, 24).

4. Apparatus according to claim 1, wherein each hinging section (16, 18, 20, 22, 24) comprises beams (32, 40) and a generally vertical corner member (76); and comprising:
a clevis (80) having a pair of legs (126, 128) extending therefrom with each of the legs having an aperture (122, 124) therein;
means (88) for releasably coupling the clevis (80) to the first beam (32);
a lever (82) having a leg (134) extending therefrom with an aperture (136) therein, the leg (134) being disposed between the pair of legs (126, 128) of the clevis (80);
means (112) for releasably coupling the lever (82) to the second beam (40);
a shaft (84) coupled to the vertical corner member and extending through the apertures (122, 124) apertures in the pair of legs (126, 128) of the clevis (80) and the aperture (136) in the leg (134) of the lever (82); and
a cap (86) coupled to the shaft (84) on an opposite side of the clevis (80) and the lever (82) from a vertical corner member (76).

5. Apparatus according to claim 4, wherein the clevis (80) has a portion thereof with a hollow interior (96) having an aperture (106) extending through a wall thereof and the means (88) for releasably coupling the clevis (80) to the first beam (32) comprises a plug (88) mounted in an end of the first beam (32) and having an end portion (94) for removable insertion in the hollow interior (96) of the clevis (80) and having a resilient retainer (98) for engaging the aperture (106) in the wall of the clevis (80) to releasably couple the end of the plug (88) in the hollow interior (96) of the clevis (80).

6. Apparatus according to claim 5, wherein the lever (82) has a portion thereof with a hollow interior (110) having an aperture (112) extending through a wall thereof and the means (114) for releasably coupling the lever to the second beam (40) comprises a second plug (114) mounted in an end of the second beam (40) and having an end portion (110) for removable insertion in the hollow interior (110) of the lever (82) and having a resilient retainer (98) for engaging the aperture (112) in the wall of the lever (82) to releasably couple the end of the second plug (114) in the hollow interior (110) of the lever (82).

7. Apparatus according to claim 6, wherein the first and second beams (32, 40) comprise hollow tubes and the first mentioned plug (88) and the second plug (114) each have a portion thereof disposed within and glued to the tubes comprising the first and second beams (32, 40), respectively.

## Patentansprüche

1. Eine Kinderspielvorrichtung, die folgende Kombination umfaßt:
einen Rahmen aus einer Mehrzahl von schwenkbaren Abschnitten, die zu einer generell umschlossenen, freistehenden Struktur angeordnet werden können; jeder schwenkbare Abschnitt dieser Mehrzahl von schwenkbaren Abschnitten (16) ist dabei durch eine Eckstruktur (34/36) mit mindestens einem anderen schwenkbaren Abschnitt verbunden und weist vier Balken auf (30, 32, 34, 36), die an ihren entgegengesetzten Enden verbunden sind, um eine generell rechtwinklige Struktur mit offenem Innenraum zu bilden; sowie ein Feld, um mindestens einen der besagten schwenkbaren Abschnitte des besagten Rahmens mit einer Szene zu versehen, die als Hintergrund zur Simulierung eines normalen Spielumfelds dient, wobei die Szene im wesentlichen einen der schwenkbaren Abschnitte vollständig abdeckt;
dadurch gekennzeichnet, daß die besagte Eckstruktur (34, 36) folgendes umfaßt: einen an einen der besagten schwenkbaren Abschnitte (16) gekuppelten Schäkel (80), eine in diesem Schäkel (80) nicht drehbar eingebaute Welle (84) mit nicht drehbarer Verbindung zur Eckstruktur (34, 36), sowie einen Hebel (82), der an einen zweiten, schwenkbaren Abschnitt (18) gekuppelt ist und mindestens teilweise in den Schäkel (80) mündet, wobei der Hebel (82) um die Welle (84) drehbar ist; sowie dadurch, daß
das Feld auswechselbar ist und aus einem biegsamen Material besteht, das an dem Rahmen abnehmbar angebracht werden kann.

2. Vorrichtung entsprechend Anspruch 1, wobei das auswechselbare Feld aus einer Mehrzahl von auswechselbaren Feldern (14) aus einem biegsamen Material gewählt wird, sowie jedes besagte Feld eine Szene darstellt und auf einem der besagten schwenkbaren Abschnitte (16, 18, 20, 22, 24) abnehmbar angebracht werden kann.

3. Vorrichtung entsprechend Anspruch 1, bei der die Mehrzahl an Abschnitten (16, 18, 20, 22, 24) von generell gleicher Höhe ist; und
die Vorrichtung eine Mehrzahl von auswechselbaren Feldern (14) umfaßt, und jedes dieser Felder eine Szene darstellt, um mannigfaltige Szenen zu bilden, und wobei jedes Feld (14) biegsames Material aufweist, das zur Anbringung an dem Rahmen (12) geeignet ist, um auf dem Rahmen (12) mindestens eine Szene zu bilden, wobei jede der mannigfaltigen Szenen im wesentlichen mindestens einen Abschnitt aus der Mehrzahl an Abschnitten (16, 18, 20, 22, 24) vollständig abdeckt.

4. Vorrichtung entsprechend Anspruch 1, wobei jeder schwenkbare Abschnitt (16, 18, 20, 22, 24) Balken (32, 40) und ein generell vertikales Eckelement (76), sowie folgendes umfaßt:
einen Schäkel (80) mit einem sich von diesem erstreckenden Paar von Schenkeln (126, 128), wobei jeder Schenkel eine Öffnung (122, 124) aufweist;
Mittel zur lösbaren Kupplung des Schäkels (80) an den ersten Balken (32);
einen Hebel (82) mit einem sich davon erstreckenden Schenkel (134), der eine Öffnung (136) aufweist, wobei der Schenkel (134) zwischen dem Schenkelpaar (126, 128) des Schäkels (80) angeordnet ist;
Mittel (112) zur lösbaren Kupplung des Hebels (82) an den zweiten Balken (40);
eine Welle (84), die an das vertikale Eckelement gekuppelt ist und sich durch die Öffnungen (122, 124), Öffnungen in dem Schenkelpaar (126, 128) des Schäkels (80) und die Öffnung (136) in dem Schenkel (134) des Hebels (82) erstreckt; und
eine Kappe (86), die mit der Welle (84) an einer entgegengesetzten Seite des Schäkels (80) und des Hebels (82) von einem vertikalen Eckelement (76) verbunden ist.

5. Vorrichtung entsprechend Anspruch 4, deren Schäkel (80) zum Teil einen Hohlraum (96) mit einer durch eine Wandung führenden Öffnung (106) aufweist, die folgendes umfaßt: die Mittel (88) zur lösbaren Kupplung des Schäkels (80) an den ersten Balken (32) umfassen einen Steckeinsatz (88), der in einem Ende des ersten Balkens (32) montiert ist, und ein Endstück (94) zur entfernbaren Einfügung in den Hohlraum (96) des Schäkels (80), sowie eine elastische Haltevorrichtung (98), um in die Öffnung (106) in der Wandung des Schäkels (80) einzugreifen und so das Ende des Steckeinsatzes (88) in dem Hohlraum (96) des Schäkels (80) lösbar zu kuppeln.

6. Vorrichtung entsprechend Anspruch 5, deren Hebel (82) zum Teil einen Hohlraum (110) mit einer durch eine Wandung führende Öffnung (112) aufweist, die folgendes umfaßt: die Mittel (114) zur lösbaren Kupplung des Hebels an den zweiten Balken (40) umfassen einen zweiten Steckeinsatz (114), der in einem Ende des zweiten Balkens (40) montiert ist, und ein Endstück (110) zur entfernbaren Einfügung in den Hohlraum (110) des Hebels (82), sowie eine elastische Haltevorrichtung (98), um in die Öffnung (112) in der Wandung des Hebels (82) einzugreifen und so das Ende des zweiten Steckeinsatzes (114) in dem Hohlraum (110) des Hebels (82) lösbar zu kuppeln.

7. Vorrichtung entsprechend Anspruch 6, deren erste und zweite Balken (32, 40) hohle Röhren umfassen, wobei der ersterwähnte Steckeinsatz (88) und der zweite Steckeinsatz (114) jeweils zum Teil in diesen Röhren aus den ersten bzw. zweiten Balken (32, 40) angeordnet und mit diesen verklebt sind.

## Revendications

1. Appareil de jeu pour enfants comprenant la combinaison :
d'un châssis composé d'une pluralité de sections d'articulation pouvant être agencées en une structure indépendante généralement fermée, dans lequel chacune de la pluralité des sections d'articulation (16) est jointe à au moins une autre section d'articulation par une structure d'angle (34, 36) et est composée de quatre poutrelles (30, 32, 34, 36) jointes ensembles à leurs extrémités opposées afin de former une structure généralement rectangulaire à l'intérieur ouvert ; et un panneau pour fournir une scène sur au moins une desdites sections d'articulation dudit châssis, la scène créant un décor qui simule un environnement de jeu courant, la scène couvrant sensiblement la totalité de l'une des sections d'articulation ;
caractérisé en ce que ladite structure d'angle (34, 36) comprend une chape (80) couplée à l'une desdites sections d'articulation (16), un axe (84) monté de manière non rotative à l'intérieur de la chape (80) et couplé de manière non rotative à la structure d'angle (34, 36) et un levier (82) couplé à une deuxième section d'articulation (18) et reçu au moins partiellement à l'intérieur de la chape (80), le levier (82) pouvant tourner autour de l'axe (84) ; et en ce que
le panneau est un panneau interchangeable constitué par un matériau souple pouvant être fixé de manière amovible au châssis.

2. Appareil selon la revendication 1, dans lequel le panneau interchangeable est sélectionné dans une pluralité de panneaux interchangeables (14) constitués par un matériau souple, chaque dit panneau affichant une scène et pouvant être fixé de manière amovible à l'une desdites sections d'articulation (16, 18, 20, 22, 24).

3. Appareil selon la revendication 1, dans lequel la pluralité de sections (16, 18, 20, 22, 24) sont généralement de la même hauteur ; et
l'appareil comprend une pluralité de panneaux interchangeables (14) affichant chacun une scène afin de fournir des scènes multiples et chaque panneau (14) étant constitué par un matériau souple adapté pour être monté sur le châssis (12) afin de former au moins une scène sur le châssis (12), chacune des scènes multiples couvrant sensiblement la totalité d'au moins une de la pluralité des sections (16, 18, 20, 22, 24).

4. Appareil selon la revendication 1, dans lequel chaque section d'articulation (16, 18, 20, 22, 24) comprend des poutrelles (32, 40) et un élément d'angle généralement vertical (76) ; et comprenant :
une chape (80) comportant une paire de branches (126, 128) s'étendant à partir de celle-ci, chacune des branches comportant une ouverture (122, 124) à l'intérieur ;
un moyen (88) pour coupler de manière libérable la chape (80) à la première poutrelle (32) ;
un levier (82) comportant une branche (134) s'étendant à partir de celui-ci et comportant une ouverture (136) à l'intérieur, la branche (134) étant disposée entre la paire de branches (126, 128) de la chape (80) ;
un moyen (112) pour coupler de manière libérable le levier (82) à la deuxième poutrelle (40) ;
un axe (84) couplé à l'élément d'angle vertical et s'étendant à travers les ouvertures (122, 124) dans la paire de branches (126, 128) de la chape (80) et l'ouverture (136) dans la branche (134) du levier (82) ; et
un chapeau (86) couplé à l'axe (84) sur un côté opposé de la chape (80) et du levier (82) à partir d'un élément d'angle vertical (76).

5. Appareil selon la revendication 4, dans lequel la chape (80) comporte une partie à l'intérieur creux (96) comportant une ouverture (106) traversant une paroi de la partie et le moyen (88) pour coupler de manière libérable la chape (80) à la première poutrelle (32) comprend une cheville (88) montée dans une extrémité de la première poutrelle (32) et comportant une partie d'extrémité (94) destinée à être insérée de manière amovible dans l'intérieur creux (96) de la chape (80) et comportant une retenue élastique (98) pour engager l'ouverture (106) dans la paroi de la chape (80) afin de coupler de manière libérable l'extrémité de la cheville (88) dans l'intérieur creux (96) de la chape (80).

6. Appareil selon la revendication 5, dans lequel le levier (82) comporte une partie à l'intérieur creux (110) comportant une ouverture (112) traversant une paroi de la partie et le moyen (114) pour coupler de manière libérable le levier à la deuxième poutrelle (40) comprend une deuxième cheville (114) montée dans une extrémité de la deuxième poutrelle (40) et comportant une partie d'extrémité (110) destinée à être insérée de manière amovible dans l'intérieur creux (110) du levier (82) et comportant une retenue élastique (98) pour engager l'ouverture (112) dans la paroi du levier (98) afin de coupler de manière libérable l'extrémité de la deuxième cheville (114) dans l'intérieur creux (110) du levier (82).

7. Appareil selon la revendication 6, dans lequel les première et deuxième poutrelles (32, 40) comprennent des tubes creux et la première cheville mentionnée (88) et la deuxième cheville (114) comportent chacune une partie qui est disposée à l'intérieur des et collée aux tubes composant les première et deuxième poutrelles (32, 40), respectivement.
